# EUROPEAN PATENT APPLICATION

(11) **EP 4 592 931 A1**
(43) Date of publication of application: **30.07.2025**
(21) Application number: 24154412.1
(22) Date of filing: 29.01.2024
(51) Int. Cl.: G06Q 20/40

(54) **PAYEE CONFIRMATION**

(71) Applicant: Mastercard International Incorporated, Purchase, NY 10577 (US)
(72) Inventor: Sharp, Robert Edward, London, SE4 2DY (GB)
(74) Representative: Barker Brettell LLP

(57) **Abstract**

The present invention relates to a computer implemented method for providing confirmation of a payee name. The method comprises comparing a reference payee name 112 with a current name 122 associated with a payee account to calculate a first score 141 indicative of similarity between the reference payee name 112 and the current name 122; and comparing the reference payee name 112 with a historical name 126 associated with a historical payment transaction to the payee account to calculate a second score 151 indicative of the similarity between the reference payee name 112 and the historical name 126. The first score 141 and the second score 151 are combined to produce a similarity score 162. An indication 132 is provided of a likelihood that the reference payee name 112 corresponds to the payee account based at least in part on the similarity score 162. By producing a similarity score 162 and providing the indication 132, incorrect or fraudulent payments may be detected and prevented.

## Description

### TECHNICAL FIELD

The present invention relates to methods and systems for providing confirmation of a payee name. In particular, the methods and systems provide an indication of a likelihood that a reference payee name of a new payment transaction corresponds to a payee account.

### BACKGROUND

When performing electronic payments, such as online or via mobile banking applications, it is important to provide confirmation of the payee's identity in order to improve the security of any transaction. This is particularly important when paying a payee account for the first time, as users are often relying upon payee account details that have been provided to them by the payee. Ensuring that new transactions are performed securely is vital, otherwise the payer may have to blindly trust that the details that have been provided to them are correct and legitimate.

One method for performing said verification involves checking that a payee name entered by the user matches a name associated with the payee account (the payee account being identified by an account number and sort code, for example). If the entered payee name matches the name associated with the payee account, this can provide some reassurance to the user that they have entered the correct account details. Likewise, if the entered payee name does not match the name associated with the payee account, the user may be informed that the account details are incorrect.

This name-based verification method does provide some additional security, but has certain disadvantages. Firstly, this method may fail in instances of illegitimate or fraudulent activity, for example where the names match but the underlying payee account does not belong to the payee that the user intended. Secondly, this method may be susceptible to providing false negatives in instances where the entered payee name is not an exact match to the name associated with the payee account. For example, where a user enters a nickname or a different form of a name (such as initials), the entered payee name may be flagged as not matching the name associated with the payee account, despite the underlying payee identity being correct.

Providing confirmation to users of payee account details is therefore desirable, but current methods may not provide sufficiently robust or reliable verification. Thus, the present invention aims to address at least some of the problems associated with current payee confirmation methods, in order to enable more secure transactions.

### SUMMARY

According to an aspect of the invention, there is provided a computer implemented method for providing confirmation of a payee name, the method comprising:
receiving a reference payee name for a new payment transaction between a payer account and a payee account;
comparing the reference payee name with a current name associated with the payee account to calculate a first score indicative of similarity between the reference payee name and the current name;
comparing the reference payee name with a historical name associated with a historical payment transaction to the payee account to calculate a second score indicative of the similarity between the reference payee name and the historical name;
combining the first score and the second score to produce a similarity score; and
providing an indication of a likelihood that the reference payee name corresponds to the payee account based at least in part on the similarity score.

The method may be used as part of an existing confirmation of payee process in order to assist in providing confirmation/reassurance to users that the reference payee name corresponds to the payee account, based on the details of the new payment transaction.

The method may reduce instances of illegitimate or fraudulent transactions. By confirming that the reference payee name corresponds to the payee account (and not just the current name of the account, but an identity of the payee account holder), the security of new payment transactions may be improved. The method may also be used to help reduce incorrect transactions from occurring, for example where the payer enters incorrect payment details.

Comparing the reference payee name with the current name to calculate the first score may be known as a Verify Name (VN) sub-process. Comparing the reference payee name with the historical name to calculate the second score may be known as a Verify Name History (VNH) sub-process. The first and/or second score may also be used individually alongside the similarity score in order to determine the likelihood that the reference payee name corresponds to the payee account.

The similarity score (calculated by combining the first and second scores) may advantageously provide a more robust or reliable indication of the likelihood that the reference payee name corresponds to the payee account than the first and/or the second score alone. For example, where the reference payee name is a colloquial or different form of the current name, the first score may indicate a low similarity between the reference payee name and the current name - a false negative. However, if said reference payee name has been used in historical transactions, comparison of the reference payee name and historical names (the second score) may indicate a high similarity. Thus, the similarity score produced by combining the first and second scores may be used the infer that although the reference payee name and current name are not a match, the reference payee name does in fact correspond to the payee account. An indication of this can be provided to a paying user (e.g., a user of a mobile banking application, or a financial institution instruction the new payment transaction) can be provided accordingly, thereby reducing instances of false negatives that may arise when relying upon the first score alone.

The calculation of the similarity score may advantageously provide for more robust or reliable payee confirmation with reduced computational inputs and requirements, when compared to alternative solutions. As both of the VN and VNH sub-processes rely upon a comparison involving the reference payee name, only the reference payee name need be input and communicated (e.g., by a user entering details into a mobile application) - along with details of the new payment transaction (e.g., account and sort code). The method may therefore reduce or eliminate the need to input and communicate additional information that may otherwise be required to provide sufficient confirmation. The method may reduce computation resources that are required to provide sufficient confirmation; comparing the reference payee name against the current name and historical names may require less computational processing than other methods (e.g., biometrics). Computational resources associated with communicating the required information may also be reduced; communicating the reference payee name from a user device (e.g., a mobile phone) to a payment provider/financial institution may require minimal bandwidth, for example.

The computer implemented method may further comprise: based on the indication of the likelihood that the reference payee name corresponds to the payee account, determining a continued process for the new payment transaction.

The continued process may result in the new payment transaction being completed or may result in the new payment transaction being terminated/suspended, based upon the indication of likelihood. Thus, where the likelihood that the reference payee name corresponds to the payee account is low, incorrect or illegitimate transactions may be advantageously prevented.

Depending upon the implementation of the method and the parties involved (discussed further below), the continued process for the new payment transaction may be instigated and/or performed by, for example: a user (e.g., a user setting up the new payment transaction via a mobile banking application); a payer's bank or financial institute; a payee's bank or financial institute; and/or a third-party payment provider. For example, the indication of likelihood may be provided to the user who may then choose to proceed with or cancel the new payment transaction based upon the indication. Additionally, or alternatively, the indication of likelihood may be provided to the payer's or payee's bank who may then automatically allow or block the new payment transaction based upon the indication.

When the likelihood that the reference payee name corresponds to the payee account is below a predetermined threshold, the continued process for the new payment transaction may comprise at least one of: updating the reference payee name; and cancelling the new payment transaction.

The likelihood may be determined by comparing the similarity score to the predetermined threshold. If the similarity score is above the predetermined threshold, the likelihood that the reference payee name corresponds to the payee account may be regarded as low, and vice versa (note that a high similarity score does not necessarily indicate high similarity). The predetermined threshold may comprise a plurality of thresholds, each corresponding to a certain level of likelihood - e.g., 'high', 'medium' and `low'. The indication and the continued process may be adapted and performed according to the comparison of the similarity score and the predetermined threshold. The method may advantageously reduce or eliminate transactions being conducted where there is a low likelihood that the reference payee name corresponds to the payee account, which may reduce instances of incorrect or fraudulent transactions.

Where the reference payee name is updated as part of the continued process (following determination that there is a low likelihood that the reference payee name corresponds to the payee account), the method described herein may be repeated for the updated reference payee name - e.g., new first and second scores, and a new similarity score, may be calculated for the updated reference payee name. For example, the indication may be provided to a user, indicating that there is a low likelihood that the reference payee name corresponds to the payee account. Realising that they have input the wrong name, the user may provide an updated payee reference name.

If the likelihood is low and cannot be explained and/or corrected, the continued process may comprise cancelling the new payment transaction, thereby reducing the possibility that transactions are conducted with incorrect or fraudulent payee accounts. Additionally, or alternatively, where the likelihood that the reference payee name corresponds to the payee account is relatively high, the new payment transaction may be completed.

Combining the first score and the second score may comprise subtracting one of the first score and the second score from the other of the first score and the second score, so as to produce the similarity score.

The first score and second score may both be numerical values. The similarity score may correspond to the first score minus the second score. This may mean that, advantageously, the similarity score is a single, numerical value, therefore allowing easy interpretation and/or analysis of the similarity.

The first and second score may be normalised to be within the same numerical range as each other. For example, both the first score and second score may have a value between 1 and 999. The initial calculation of the first and second score may result in said normalised value. Alternatively, the first and second score may be calculated across a different numerical range and then normalised to be in the same numerical range as each other.

The first and second score may both be calculated as between 1 and 999. A low score may indicate that the comparison of the relevant names yields a high degree of similarity (with 1 being an exact match), while a low score may indicate that the comparison of the relevant names yields a low degree of similarity. Under such a scheme, the similarity score (first score minus second score) may be inferred as indicating one of the following possibilities:
i) Strongly negative - this indicates that the reference payee name and the current name are highly similar, but that the reference payee name and historical name are not similar. This may indicate fraudulent activity, e.g., where the payee is using a new name for the new payment transaction that does not appear in the historical transaction data;
ii) Strongly positive - this indicates that the reference payee name and the current name are not similar, but that the reference payee name and historical name are highly similar. This may indicate that the reference payee name is not the current name of the payee account, but has been used in historical transactions (such as a nickname or a maiden name);
iii) Weakly positive or negative - this indicates that comparison of the reference payee name with the current payee name and historical name are both equally similar (e.g., both a strong or weak match).

The computer implemented method may further comprise comparing the similarity score to a predetermined threshold. The likelihood that the reference payee name corresponds to the payee account may be based upon the comparison of the similarity score and the predetermined threshold.

For example, the similarity score may be considered to be either strongly negative (e.g., less than -200), strongly positive (e.g., greater than 200), or weakly positive or negative (e.g., between -200 and 200 inclusive). The similarity score may be supplemented by additional information, thereby enabling a desirable continued process for the new payment transaction to be determined (either by a user or by a financial institution or intermediary, for example). The continued process for the new payment transaction may be performed automatically by a recipient of the indication. For example, a payer's bank may automatically block a transaction, or require the payer to take additional confirmation action (e.g., enter additional information), where the similarity score does not meet a predetermined threshold.

The indication of likelihood may comprise the similarity score, the first score and a metric indicating the complexity of the reference payee name and/or the current name, for example. Based upon these scores and metrics, an overall likelihood may be determined. This may be achieved by applying a threshold to each score/metric, which may vary depending upon the relevant parties' acceptable level of risk. The indication may additionally or alternatively include a summary for whether each of these factors meet a predetermined threshold, meaning that such analysis does not have to be performed by the relevant party. The indication may comprise an overall indication of likelihood that the reference payee name corresponds to the payee account based, thereby aggregating the various pieces of information described above into a single indication.

For example, the indication may include a score/metric that indicates that the similarity score is weakly negative or positive (e.g., between -200 and 200), the first score is indicative of a high degree of similarity between the reference payee name and the current name (e.g., the first score is less than 200), and that the reference payee name and current name are sufficiently complex. Based on such an indication, a user may choose to proceed with the new payment transaction. The user may be any party that is involved in instructing the new payment transaction. The user may be a user of a mobile banking application, or the user may be a payer's bank/financial institution who are acting upon the instructions of the payer.

Comparing the reference payee name with the historical name may comprise comparing the reference payee name with a plurality of historical names, each associated with one of a plurality of historical payment transactions to the payee account. Calculating the second score may comprise: calculating a plurality of second scores, each being indicative of the similarity between the reference payee name and one of the historical names of the plurality of historical names; and combining the plurality of second scores.

The historical payment transactions may be extracted from a database of historical transactions associated with a payee account. For example, the historical payment transactions may correspond to transactions to and/or from the payee account within the given time period (such as the last 13 months). These may be all the transactions to and from the payee account, not just the transactions between the payer and payee in question. The plurality of historical names may be all of the names associated with said historical payment transactions.

The method may be particularly advantageous where the new payment transaction involves a transaction between a payer and a payee that have not previously transacted. Where the historical payment transactions comprise transactions between the payee and other parties, the historical names associated with those transactions may be used for confirmation of the reference payee name - i.e., the second score may be indicative of the similarity between the reference payee name (provided by the payee) and historical names that have been provided by other parties in historical transactions. This may assist in `building a picture' of what names are associated with the payee, without solely relying upon the reference payee name and the current name (which may be determined by the payee). Thus, the method may provide for more robust or trustworthy confirmation that the reference payee name corresponds to the payee account.

Each of the historical names may be compared to the reference payee name individually, using the methods described (e.g., repeatedly performing the VNH sub-process). The plurality of second scores associated with all of the historical names may be combined, thereby producing a final second score which may be used to produce the similarity score. Combination of the plurality of second scores may comprise calculating a mean, for example. Second scores may not be calculated for all of the historical names; some historical names may be omitted where they are not suitable (for example, where the historical name is a generic name or is itself determined to be an incorrected or illegitimate transaction).

Combining the plurality of second scores may comprise weighting each of the plurality of second scores based upon a number of occurrences and/or a value of historical payment transactions associated with each of the plurality of historical names.

For example, combining the plurality of second scores may comprise calculating a weighted mean of the plurality of second scores. The plurality of second scores may be weighted according to the number of occurrences of each corresponding historical name in the historical transaction data - i.e., historical names that appear numerous times in the historical transaction data may be weighted more heavily than historical names appearing just once. Likewise, historical names that are associated with higher value transactions in the historical transaction data (the value may be cumulative across multiple transactions with the same historical name) may be weighted more heavily than historical names associated with only a small value. The weighting may advantageously improve the trustworthiness of the second score. The impact of historical names which are used infrequently or with low value transactions on the second score may be reduced, meaning that the second score may be indicative of the similarity between the reference payee name and historical names that have been used frequently and/or for higher value transactions (and thus may be regarded as more trustworthy and suitable for forming the basis of providing confirmation).

The computer implemented method may further comprise modifying at least one of the reference payee name, current name and historical name so that said name is in a predetermined format. Prior to the comparison of the respective names, the names may be 'harmonised' - i.e., put into the same predetermined format. This may advantageously allow for a more accurate comparison of the underlying names themselves, rather than inconsequential formatting differences that may impact the calculation of the first and second scores. The reference payee name, current name and historical name may be provided as a string. Where said names are not in this format (e.g., they are instead provided as a character array), the names may be first converted to strings.

Comparing the reference payee name with the current name and comparing the reference payee name with the historical name may comprise calculating an edit distance between each pair of names. The first score and second score may be based at least in part on the respective edit distance.

The edit distance may be computed using a suitable algorithm or scheme for calculating the similarity of two pieces of information, e.g., two strings. Computing the edit distance may comprise calculating a Levenshtein distance, a longest common subsequence, a Hamming distance, a Damerau-Levenshtein distance and/or a Jaro distance, for example. Generally, the edit distance is indicative of the number of operations (e.g., insertion/deletion, substitution, transposition) required to transform one string into another. The calculated edit distance may be converted to the first/second score based upon a predetermined conversion factor.

Calculating the edit distance may comprise calculating a plurality of edit distances for each pair of names in question and combining the plurality of edit distances. This may comprise applying multiple different algorithms to each pair of names (which may be advantageous where different algorithms utilise different operations). Edit distances may be calculated for multiple different components of the names and combined together. For example, edit distances may be calculated for the whole strings, for parts of the strings (e.g., first name and last name independently), for name initials only, etc. This may advantageously provide a more precise calculation of the similarity of the names in question. Calculating multiple edit distances may also enable further similarity factors to be inferred - for example, an exact match (edit distance of zero) of first names but very low similarity (large edit distance) of last names may indicate use of a maiden name.

The computer implemented method may further comprise: determining that at least one of the reference payee name, current name and historical name comprise a plurality of names; separating said plurality of names; and comparing the relevant names and calculating the first and/or second score for each of the separated names.

Determining that a name comprises a plurality of names may comprise detecting a conjunction within the name; e.g., 'and' or '&'. Alternatively, or additionally, natural language processing may be used to identify a plurality of names within the name (e.g., by recognising the presence of expected first and/or last names). The first and/or second scores for each of the plurality of names may be combined and used to calculate the similarity score. Combining the first and/or second scores may comprise calculating a mean score, or may comprise retaining the score indicative of the greatest similarity, for example.

Calculating first and/or second scores for a separated plurality of names within a name may provide a more reliable indication of similarity. For example, the current name of a payee account may be "John and Jane Doe". This may be separated into two current names for use in the method - "John Doe" and "Jane Doe". If a new payment transaction was instigated with the reference payee name "John Doe", this may ordinarily result in the first score being indicative of only partial similarity between "John Doe" and "John and Jane Doe". However, when the plurality of names are separated as above, the comparison of "John Doe" and "John Doe" is an exact match. The first score may reflect this, which may therefore enable a more accurate indication of likelihood that the reference payee name corresponds to the payee account to be provided.

The computer implemented method may further comprise: determining a linguistic characteristic of the at least one of the reference payee name, current name and historical name; and modifying the likelihood that the reference payee name corresponds to the payee account based upon the determined linguistic characteristic.

Modifying the likelihood based upon the determined linguistic characteristic may enable the likelihood of similarity to more accurately reflect similarity compared to using just the first and second score (which may be calculated based upon edit distance, for example). Modifying the likelihood may comprise modifying or scaling one or more of the first score, the second score and the similarity score to account for the determined linguistic characteristic.

For example, the first score may indicate a high degree of similarity. However, if the reference payee name and current name are both very short or generic, for example, the first score may be modified so that the similarity is reduced. This may therefore modify the similarity score and indication of likelihood - in essence, although the names are a close match, the confirmation may not strongly rely upon this particular first score.

Determining the linguistic characteristic may comprise applying a natural language processing algorithm to the reference payee name, current name and/or the historical name. The natural language processing algorithm may, for example, comprise a machine learning language algorithm that has been trained to determine the likelihood that a provided string is a name (rather than some random or generic string of characters). The natural language processing algorithm may analyse string length, patterns of characters, patterns of words, etc., and compare these to expected characteristics of a name.

The indication of likelihood that is provided may comprise a statement or indication regarding the determined linguistic characteristic. This additional information may advantageously be used in determining the continued process for the new payment transaction.

The linguistic characteristic may be indicative of at least one of:
(i) a complexity of the name;
(ii) the likelihood that the name is or comprises a generic sequence of characters; and
(iii) the likelihood that the name is or comprises a real name.

Determining a complexity of a name may comprise analysing the number of characters in the name, the number of different characters in the name, the total length of the names, or components of the name that are just initials, for example. Determining the likelihood that the name is or comprises a generic sequence of characters may comprise determining if the name includes any predetermined generic words (which may be stored in a database and compared to the name using a lookup function). Generic sequences may include: generic titles (such as 'Mr', 'Mrs', 'Dad' or `Mum'); financial related words (such as 'account', 'current', 'savings' or the names of banks/financial institutions); and/or random, repeated or simple sequences (such as 'aaaaaa', 'abcdef' or 'aabbcc'). Modifying the likelihood based on these determined linguistic characteristics may advantageously provide for a more reliable indication of confirmation.

The computer implemented method may further comprise: determining an account archetype for the payee account based on historical names associated with historical payment transactions to the payee account; and modifying the likelihood that the reference payee name corresponds to the payee account based upon the determined account archetype.

The payee account may already be `flagged' as being a particular account architype, and this account architype may be extracted from a database containing information of the payee account. For example, a payee may have changed their name, and this information may be associated with the payee account. Alternatively, the account architype may be determined based off of, for example, data associated with the historical payment transactions of the payee account. This determination may comprise natural language processing algorithms, like those discussed above, being applied to the historical names associated with historical payment transactions.

For example, it may be determined that the historical names comprise a common first name but two different last names. In such a case, the payee account may be determined to be a `maiden name' architype. Alternatively, it may be determined that the historical names may comprise a personal name and the name of a business. In such a case, the payee account may be determined to be a 'business' account architype. Similar to the linguistic characteristics discussed above, determination of account architype may be used to modify the likelihood of similarity and the indication (e.g., by modifying or scaling one or more of the first score, the second score and the similarity score). This may advantageously provide for a more robust confirmation of payee name in instances where such account architypes are present. The indication of likelihood that is provided may comprise a statement or indication regarding the determined account architype.

The account archetype may be at least one of:
(i) a business account, wherein the historical names comprise a business name and an individual name;
(ii) a joint account, wherein the historical names comprise two different individual names and/or a joint name; and
(iii) a maiden name account, wherein the historical names comprise two different surnames with a common forename.

According to a further aspect of the invention, there is provided a system for providing confirmation of a payee name, wherein the system is configured to:
receive a reference payee name for a new payment transaction between a payer account and a payee account;
compare the reference payee name with a current name associated with the payee account to calculate a first score indicative of similarity between the reference payee name and the current name;
compare the reference payee name with a historical name associated with a historical payment transaction to the payee account to calculate a second score indicative of the similarity between the reference payee name and the historical name;
combine the first score and the second score to produce a similarity score; and
provide an indication of a likelihood that the reference payee name corresponds to the payee account based at least in part on the similarity score.

The system may be configured to perform the method according to the above aspect of the invention.

According to a further aspect of the invention, there is provided a non-transitory computer-readable medium comprising instructions which, when executed by a computer, cause the computer to carry out a method for providing confirmation of a payee name, the method comprising:
receiving a reference payee name for a new payment transaction between a payer account and a payee account;
comparing the reference payee name with a current name associated with the payee account to calculate a first score indicative of similarity between the reference payee name and the current name;
comparing the reference payee name with a historical name associated with a historical payment transaction to the payee account to calculate a second score indicative of the similarity between the reference payee name and the historical name;
combining the first score and the second score to produce a similarity score; and
providing an indication of a likelihood that the reference payee name corresponds to the payee account based at least in part on the similarity score.

The non-transitory computer-readable medium may comprise instructions which, when executed by a computer, cause the computer to carry out the method according to the above aspect of the invention.

According to a further aspect of the invention, there is provided a computer program product comprising instructions which, when the program is executed by a computer, cause the computer to carry out a method for providing confirmation of a payee name, the method comprising:
receiving a reference payee name for a new payment transaction between a payer account and a payee account;
comparing the reference payee name with a current name associated with the payee account to calculate a first score indicative of similarity between the reference payee name and the current name;
comparing the reference payee name with a historical name associated with a historical payment transaction to the payee account to calculate a second score indicative of the similarity between the reference payee name and the historical name;
combining the first score and the second score to produce a similarity score; and
providing an indication of a likelihood that the reference payee name corresponds to the payee account based at least in part on the similarity score.

The computer program product may comprise instructions which, when the program is executed by a computer, cause the computer to carry out the method according to the above aspect of the invention.

### DESCRIPTION OF FIGURES

Embodiments of the invention will be described, purely by way of example, with reference to the accompanying drawings, in which:
Figure 1 shows a schematic block diagram of a system for providing confirmation of a payee name;
Figure 2 shows a schematic block diagram of a system for providing confirmation of a payee name;
Figure 3 shows a schematic block diagram of a system for providing confirmation of a payee name;
Figure 4 shows a schematic illustration of interactions between various parties involved in a method for providing confirmation of a payee name;
Figure 5 shows an example of a data processing device; and
Figure 6 shows a flow diagram of a computer implemented method for providing confirmation of a payee name.

### DETAILED DESCRIPTION

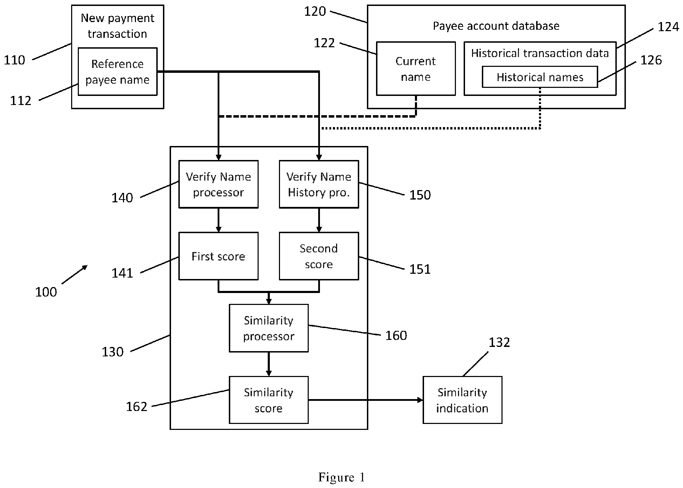

Referring to Figure 1, a schematic diagram of a system 100 for providing confirmation of a payee name is shown. The system 100 comprises a number of sub-processors/components that can generally be regarded as a confirmation processor 130.

A reference payee name 112 associated with a new payment transaction 110 is received by the confirmation processor 130. The new payment transaction 110 may be instigated by a user via an internet banking website or a mobile banking application, for example. The user may input the reference payee name 112 into a graphical user interface when instructing the new payment transaction 110 (along with other necessary transaction information, such as an account number and sort code for the payee account). A current name 122 associated with the payee account and one or more historical names 126 associated historical transactions 124 of the payee account are also received. The current name 122 and historical names 126 are retrieved from a payee account database 120. The payee account database 120 may be held by a payee's bank or financial institution.

The reference payee name 112 and current name 122 are provided to a Verify Name (VN) processor 140. The VN processor 140 is configured to compare the reference payee name 112 to the current 122 and calculate a first score 141 that is indicative of the similarity between the reference payee name 112 and the current name 122 (based on an edit distance, for example). The reference payee name 112 and the one or more historical names 126 are provided to a Verify Name History (VNH) processor 150. The VNH processor is configured to compare the reference payee name to the one or more historical names 126 and calculate a second score 151 that is indicative of the similarity between the reference payee name 112 and the historical names 126. Where there is more than one historical name 126, the reference payee name 112 may be compared to each historical name 126 individually and the scores for each comparison may be combined to produce a single second score 151.

The first score 141 and the second score 151 are provided to a similarity processor 160 configured to combine the first score 141 and the second score 151. For example, the first score 141 and second score 151 may each be a score between 1 and 999, where 1 represents an exact match between the two names and 999 represents little/no similarity between the two names. The similarity processor 160 may subtract the second score 151 from the first score 141 (or otherwise perform some other mathematical operation) so as to produce a similarity score 162.

An indication 132 of a likelihood that the reference payee name corresponds to the payee account is determined and generated based upon the similarity score 162. The indication 132 (otherwise called similarity indication 132) may be used to inform a continued process (not shown) for the new payment transaction 110. Depending upon the implementation of the system 100 and the users involved, the indication 132 may be provided to one or more parties, and the continued process for the new payment transaction 110 may be instructed and processed accordingly.

For example, the indication 132 may indicate that there is a strong likelihood that the reference payee name 112 corresponds to the payee account. The indication 132 may comprise a message, including a statement such as "This name appears to be associated with this account", which is provided to a payer that has instructed the new payment transaction payment 110. The payer may then confirm that the new payment transaction 110 should proceed. The message and confirmation may be provided via a graphical user interface in a mobile banking application, for example. Additionally, or in addition, the indication 132 may include the similarity score 162 itself and may be provided to a bank/financial institute/payment provider of the payer. Based upon the similarity score 162 that is provided via the indication 132, said payee bank may then allow the new payment transaction 110 to be performed (in some arrangements only following confirmation from the payer).

In the instance where the first score 141 and second score 151 are each between 1 and 999, and the similarity score 162 is equal to the first score 141 minus the second score 151, the similarity score 162 may generally be regarded as falling into one of three categories:
i) The similarity score 162 is strongly negative. This indicates that there is a high degree of similarity between the reference payee name 112 and the current name 122 (i.e., the first score 141 is low) but that there is a low degree of similarity between the reference payee name 112 and the historical names 126 (i.e., the second score 151 is high). This may indicate fraudulent/illegitimate activity - it would be unusual for the reference payee name 112 to match the current name 122, but for that name to not appear in the historical transaction data 124 (or appear with low occurrence/value if there are multiple historical names). Therefore, although the reference payee name 112 is similar to the current name 122, based upon the strongly negative similarity score 162 the similarity indication 132 may indicate that there is a relatively low likelihood that the reference payee name 112 corresponds to the payee account.
ii) The similarity score 162 is strongly positive. This indicates that there is a low degree of similarity between the reference payee name 112 and the current name 122 (i.e., the first score 141 is high) but that there is a high degree of similarity between the reference payee name 112 and the historical names 126 (i.e., the second score 151 is low). This may indicate that the reference payee name 141 is not the name of the payee account, but that it is commonly associated with said account. This may be the case where the reference payee name 141 is a nickname, a maiden name or a joint account name for example. Therefore, although the reference payee name 112 is not similar to the current name 122, based upon the strongly positive similarity score 162 the similarity indication 132 may indicate that there is a relatively high likelihood that the reference payee name 112 corresponds to the payee account.
iii) The similarity score 162 is weakly positive or negative. This indicates that there is either a low or high degree of similarity between the reference payee name 112 and both the current name 122 and the historical names 126 (i.e., both the first score 141 and second score 151 are similarly high or low). Further information (such as the first score 141) may be used to assess which of these two possibilities is the case, and provide a similarity indication 132 accordingly - this is discussed further below.

The nature of the indication 132 may be determined by applying a predetermined threshold to the similarity score 162. Using the three possibilities discussed above, the predetermined threshold may be less than -200, greater than 200 or between -200 and 200 inclusive, for example.

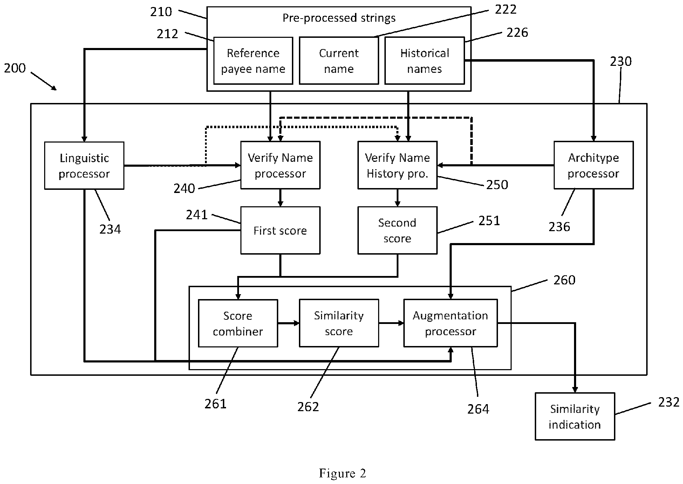

Referring to Figure 2, a schematic diagram of a system 200 for providing confirmation of a payee name is shown. The system is similar to that shown in Figure 1, but with further augmentation. The reference payee name 212, current name 222 and historical names 226 are provided to a confirmation processor 230. The confirmation processor 230 generally comprises a VN processor 240, from which the first score 241 is calculated, and a VNH processor 250, from which the second score 251 is calculated. The first score 241 and second score 251 are provided to a similarity processor 260, the similarity processor 260 comprising a score combiner 261 configured to produce a similarity score 262 (which is used in providing an indication 232 of likelihood that the reference payee name corresponds to the payee account).

The reference payee name 212, current name 222 and historical names 226 are provided to the comparison/calculation sub-processes of the system 200 as pre-processed strings 210. A harmonisation process (not shown) is performed in order to transform each of the names (as provided in a 'raw' format in a new payment transaction and/or a payee account database) into a pre-processed, similar format.

An example harmonisation process may be:
1. Convert to a lowercase string
2. Convert conjunctions (e.g. "and" to "&")
3. Remove escape characters
4. Remove abnormal spacing
5. Remove numerals
6. Remove titles (e.g., "Mr" and "Mrs")
7. Harmonise diacritics (e.g., remove any diacritics or select diacritics)
8. Remove non-numeric characters
9. If the account is a "Business" account:
   a. Remove legal descriptors (e.g. "limited")
   b. Agreed/known acronyms replaced, (e.g. "KFC" to "Kentucky Fried Chicken")
10. Personal references removed from historical names (e.g.; "mum" and "dad").

The harmonisation process may therefore improve the accuracy with which similarity is determined between the various names by removing any inconsequential differences between the names. For example, a new payment transaction may be instigated with reference payee name 212 of "Mr Bob Lowe", whereas the current name 222 stored in a payee account database for the account is "Professor Robert Lowe". Based on these names, the first score 241 may be high (indicating little similarity due to a relatively large edit distance). However, following the harmonisation process, the corresponding pre-processed strings 210 would be "robert lowe" and "bob lowe". The first score 241 for the pre-processed names would indicate a high degree of similarity. Not all of the above harmonisation steps need necessarily be performed for all names. The harmonisation process may be performed on a separate processor (not shown).

The pre-processed strings 210 are also provided to a linguistic processor 234 that is configured to determine a linguistic characteristic of each of the reference payee name 212, the current name 222 and the historical names 226. The linguistic characteristic may be at least one of:
i) a complexity of the name;
ii) the likelihood that the name is or comprises a generic sequence of characters; and
iii) the likelihood that the name is or comprises a real name.

The linguistic processor 234 may determine a metric indicating one or more linguistic characteristics of each name. The metric may comprise binary metrics indicating whether or not each name is: i) considered complex, ii) considered generic and iii) considered to be a real name. Alternatively, the metric may comprise scores (for example on a scale of 1 to 999) indicating: i) the complexity of the name, ii) the likelihood that the name is generic and iii) the likelihood that the name is a real name.

The historical names 226 may furthermore be provided to an architype processor 236 that is configured to determine whether the payee account is associated with at least one architype from:
i) a business account architype, wherein the historical names comprise a business name and an individual name;
ii) a joint account architype, wherein the historical names comprise two different individual names and/or a joint name; and
iii) a maiden name account architype, wherein the historical names comprise two different surnames with a common forename.

Alternatively, an architype processor 236 may not be required, and instead the payee account may already be labelled or flagged as a particular account architype. This information may form part of the payee account database and may be received alongside the current name 222 and the historical names 226 - e.g., the payee account may be known to be a business account or a joint account.

The determined linguistic characteristic(s) and/or the account architype may be provided to either or both of the VN processor 240 and the VNH processor 250. Said processors may adjust the first score 241 and/or the second score 251 to account for the linguistic characteristics and/or account architype. In doing so, the subsequent similarity score 262 will be adjusted, thereby modifying the likelihood that the reference payee name corresponds to the payee account that is provided via the indication 232.

For example, the reference payee name 212 may be "joe" while the current name 222 may be "jon" (after a harmonisation process, which may have removed other inconsequential characters). In such an example, the calculated first score 241 may ordinarily indicate a high degree of similarity (e.g., relatively close to 1) as only one character is different between the two names. However, the linguistic processor 234 may determine that the both the reference payee name 212 and the current name 222 are lacking in complexity and/or relatively generic, with this linguistic characteristic information being provided to the VN processor 240. The VN processor 240 may therefore adjust the first score 241 to account for this. This could be done in any number of ways - for example, a lower limit of 200 could be applied where it is found that a name is not sufficiently complex, or a penalty of 100 could be added for each of the two names that is deemed to be generic (or some other value depending on how complex/generic the names are found to be, dependent on the linguistic characteristic metric).

In another example, the reference payee name 241 may be "michelle dewar" while the historic names comprise a number of instances of "michelle dewar" and "michelle altwig" (and other similar variations thereof, for example initials only). In such an example, once the scores for each historical name are combined/averaged/weighted, the calculated second score 251 may ordinarily indicate only a moderate degree of similarity (e.g., approximately 500 on a scale of 1 to 999). However, the payee account may be flagged as a maiden name account architype (determined by the architype processor or based on existing information), with this architype information being provided to the VNH processor 250. The VNH processor 250 may therefore adjust the second score 251 to account for this. Again, this could be done in a number of ways - for example, only the ten historical names 226 that have the closest similarity (i.e., lowest second scores) may be considered, or where there are five or more exact matches between the reference payee name 212 and the historical names 226 the second score 251 may automatically be set to 1 (i.e., indicating a very strong similarity between the reference payee name 212 and the historical names 226).

Additionally, or alternatively to adjusting the first score 241 and/or the second score 251 based on the linguistic characteristics and/or the account architype, the similarity score 262 may be adjusted. The similarity processor 260 may comprise an augmentation processor 264 configured to receive information from the linguistic processor 234 and/or the architype processor 236. The augmentation processor may adjust the similarity score 262, similarly to as described for the first score 241 and second score 251 above, thereby modifying the likelihood that the reference payee name corresponds to the payee account that is provided via the indication 232.

The similarity processor 260 may be configured to produce the indication 232 of a likelihood that the reference payee name 212 corresponds to the payee account based on the similarity score 262 and, optionally, additional information relating to the first score 241, the second score 251, the linguistic characteristic and/or the account architype. The indication 232 may contain a score or metric related to each of these components, and a predetermined threshold may be applied to each in order to determine an overall indication status for likelihood.

In one example, the indication 232 may be based upon the similarity score 262, the first score 241 and a metric indicating the complexity of one or more of the reference payee name 212, current name 222 and historic names 226. As discussed above, if the similarity score is weakly positive or negative (for example, between -200 and 200), this may indicate that both or neither of the first score 241 and the second score 251 are indicative of high similarity. Therefore, the first score 241 may be analysed individually to determine if there is a high degree of similarity between the reference payee name 212 and the current name 222 (for example, the first score 241 is less than 200). A metric indicting the complexity of both the reference payee name 212 and the current name 222 may be analysed to determine if the names are sufficiently complex (the metric may be a binary 'yes' /'no' metric or may comprise a complexity score, to which a threshold can be applied).

The indication 232 may include the similarity score 262, the first score 241 and the complexity metric, such that the analysis as described above can be performed by a receiver of the indication (e.g., a payer's bank). Said analysis may be performed by the similarity processor 260 such that the indication 262 comprises a summary for each of these pieces of information. The indication 262 may comprise an overall indication based on these summaries. For example:
i) Is the similarity score between -200 and 200?
ii) Is the first score 212 below 200?
iii) Is the complexity metric indicative of sufficient complexity?

The summary of each of these may be `yes'/`no' (which may be stored as a binary 1 or 0). If each summary is 'yes' then the overall indication summary may be that there is sufficient likelihood that the reference payee name 212 corresponds to the payee account. Based upon this indication 232, the new payment transaction may be completed. If one or more of these summaries is returned as a 'no', then the overall indication may be that there is insufficient likelihood that the reference payee name 212 corresponds to the payee account.

Each summary and/or the overall indication may not be a simple yes/no. In the strongly positive similarity score example discussed above, a strongly positive similarity score 262 may mean that a nickname has been used based on the historical names (despite the reference payee name 212 not being highly similar to the current name 222). In such an example, the indication may be:
i) Is the similarity score less than -200, between -200 and 200, or greater than 200? - Greater than 200
ii) Is the first score 212 below 200? - No
iii) Is the complexity metric indicative of sufficient complexity? - Yes

The overall indication summary may be that it seems that the reference payee name 212 is an alternative name associated with the account and that there is a reasonable likelihood that the reference payee name 212 corresponds to the payee account. Based upon this indication 232, the receiver (e.g., a payer setting up the new payment transaction) may be prompted to check the reference payee name 212 and/or proceed with the transaction with caution.

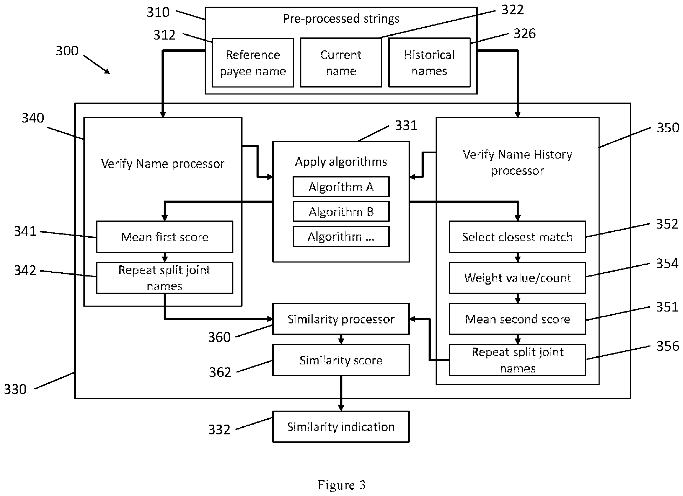

Referring to Figure 3, a schematic diagram of a system 300 for providing confirmation of a payee name is shown. The system is similar to that shown in Figures 1 and 2, but with additional details shown. Pre-processed strings 310 (comprising a reference payee name 312, a current name 322 and historical names 326) are provided to a confirmation processor 330. The confirmation processor 330 generally comprises using a VN processor 340 to calculate a first score 341 (indicative of the similarity between the reference payee name 312 and the current name 322) and using a VNH processor 350 to calculate a second score 351 (indicative of the similarity between the reference payee name 312 and the historical names 326). A similarity processor 360 combines the first score 341 and the second score 351 to produce a similarity score 362, based upon which a similarity indication 332 is provided.

The VN processor 340 and the VNH processor 350 may each call one or more algorithms 331. The algorithms 331 each calculate a similarity between a pair of names - for the VN processor 340, the reference payee name 312 is compared to the current name 322; for the VNH processor 350, the reference payee name 312 is compared to the historical names 326. Where there is a plurality of historical names 326, the reference payee name 312 may be compared to each individually, with the algorithms 331 being called repeatedly for each pair. The algorithms 331 may generally be algorithms for calculating an edit distance (such as a Levenshtein distance) between pairs of strings. The algorithms 331 may comprise a plurality of algorithms, each configured to analyse a different property of the names (for example, overall edit distance, phonetics, initials) and produce an edit distance score for each property.

Following the application of the algorithms 331 to the relevant names, the VN processor 340 and VNH processor 350 are configured to process/collate the raw edit distances in order to produce the first score 341 and second score 351.

The VN processor 340 may be configured to combine the various edit distances (e.g., by taking an average). The combined edit distance is then converted to a mean first score 341 (e.g., a score of 1 to 999 proportional to the edit distance). The above process may be repeated 342 for split joint names. Where the reference payee name 312 and/or current name 322 comprises joint names (e.g., "John and Jane Doe"), these may be split into two separate names, each of which is compared individually using the algorithms 331. The scores for each of the split names may be combined to produce an overall first score 341.

The VNH processor 350 may be configured to select 352 the closest match or matches between the reference payee name 312 and the plurality of historical names 326. The edit distances 354 for the various name pairs of the reference payee name 312 and plurality of historical names 326 may be weighted 354 based upon the value of historical transactions associated with each historical name or the occurrence of transactions associated with each historical name. Historical names 326 that occur most often or with the greatest transaction values may have a larger impact an on the overall determined similarity. Using this weighting, a mean second score 351 is calculated - this is a mean of the various edit distances provided by the algorithms 331 and the various reference payee name - current name pairs. Again, this process may be repeated for split joint names, with the score being combined to produce an overall second score 351.

Although shown in separate figures, all or part of the systems shown in of Figures 1 to 3 may be optionally combined. For example, a system may comprise the linguistic processor 234 and/or an architype processor 236 (along with any associated sub-processes, as described in relation to Figure 2), as well as the various sub-processes/steps shown in further detail described in relation to Figure 3 (e.g., algorithms 331, weighting 354, etc.).

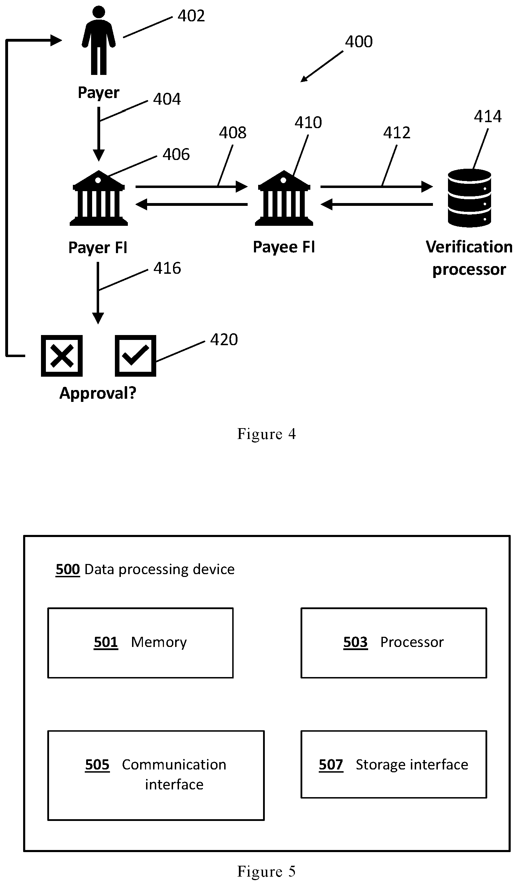

Referring to Figure 4, a flow diagram of an example payee name confirmation process 400, as may be performed by the systems 100 200 300 shown in Figures 1 to 3, is shown. A payer 402 provides instructions 404 for a new payment transaction. The instructions 404 include at least a reference payee name and details for a payee account (such as an account number and sort code). The instructions 404 may be provided via the internet or a mobile banking application, for example, and are received by a payer financial institution (FI) 406 (e.g., the payer's bank). The payer FI 406 may perform additional checks before proceeding further with the transaction, for example checking that the payer's account has sufficient funds.

The payer FI 406 provides a request 408 to a payee FI 410 (e.g., the payee's bank that holds the relevant payee account), the request 408 including the relevant details of the new payment transaction. The payee FI 410 may then perform the payee name confirmation method described herein. The method may be performed by a verification processor 414. The verification processor 414 receives 412 the reference payee name (as provided by the payer 402) and the current name and historical names associated with the payee account (which may be extracted from a payee account database). The verification processor 414, using the methods describes herein, compares the names and provides an indication 416 of a likelihood that the reference payee name corresponds to the payee account based at least in part on the similarity score.

The indication 416 may be communicated via the payer FI 410 and/or the payer FI 406. Each of these may perform their own analysis of the indication in order to determine a continued process for the new payment transaction. For example, if it is determined that there is a very low likelihood that the reference payee name corresponds to the payee account, the new payment transaction may be blocked. The payer FI 406 may take additional action to prevent illegitimate or fraudulent transactions, such as temporarily freezing the payer's account or requiring additional information/actions (such as requiring the payer 402 to call their bank to provide confirmation of the payment).

The indication 416 is provided to the payer 402. The payer FI 406 may package the indication as a confirmation function 420, which may be provided to the payer 402 via a device that they have used to instruct the new payment transaction (e.g., as part of a GUI within a mobile phone application). The payer FI 406 may convert the indication 416 to a more user-friendly form - for example, a similarity score within the indication may be converted to a message indicating the similarity such as "This name matches the name of the account".

The confirmation function 420 that is provided to the payer 402 may comprise input means for selecting a continued process for the new payment transaction. Where it is determined that there is a high likelihood that the reference payee name corresponds to the payee account, the payer 402 may confirm that the new payment transaction should proceed with the payee information that they provided. Where it is determined that there is a low likelihood that the reference payee name corresponds to the payee account, the payer 402 may confirm that the new payment transaction should be cancelled. The confirmation function 420 may comprise input means that enables the payer 402 to update the reference payee name (and other payee information), should the payer 402 realise that they have provided incorrect information.

This is just one example illustrating how various parties involved in a new payment transaction may interact during the method of the present invention. The skilled person will understand that different parties may be involved in the method at various stages. For example, a third-party payment provider may perform the confirmation of the payee name. The third-party payment provider may receive the reference payee name from the payer FI and the current name and historical names from the payee FI. The payer may communicate directly with a third-party payment provider that is conducting the payee name confirmation, rather than via the payer FI and/or the payee FI. A third-party payment provider that is conducting the payee name confirmation may have no communication with the payer directly. Instead, the third-party may communicate with the payer FI, which may decide, based on the provided indication, how they wish to proceed with the new payment transaction and provide this decision to the payer.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

Similarly, any steps of any of the methods described herein may be performed by data processing devices. By way of example, Figure 5 shows, in schematic form, a data processing device 500 that is suitable for performing the payee name confirmation method, or any of the steps/processes therein. The data processing device 500 may automatically perform any of the methods described herein.

One or more such data processing devices 500 may be provided for implementing the method of the present invention. For example, each of a payer device (for example, a mobile device), a payer FI device, a payee FI device and a third-party payment provider device (such as a payment transaction/confirmation server) may comprise a data processing device 500. Distinct data processing devices 500 may be used for various steps/processes of the method described herein. For example, each of a VN processor, a VNH processor, a similarity processor, a linguistic processor and/or an architype processor may comprise a data processing device 500. Said devices may be networked together appropriately to enable any of the methods described herein.

Data processing device 500 includes a processor 503 for executing instructions. Instructions may be stored in a memory 501. Processor 503 may include one or more processing units (e.g., in a multi-core configuration) for executing instructions. The instructions may be executed within a variety of different operating systems on the data processing device 500, such as UNIX, LINUX, Microsoft Windows^{®}, etc. More specifically, the instructions may cause various data manipulations on data stored in memory 501 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 503 is operatively coupled to a communication interface 505 such that data processing device 500 can communicate with a remote device, such as another data processing device of the system. For example, communication interface 505 may receive communications from another member of the system.

Processor 503 may also be communicatively coupled to a storage device such as a database, depending on the function of data processing device 500 within the context of the system. The storage device is any computer-operated hardware suitable for storing and/or retrieving data, where in the case of a secure storage medium the data is stored and retrieved securely.

The storage database may, for example, store details of the new payment transaction (e.g., the reference payee name) and the payee account database (e.g., the current name and historical transaction data), and it can be external to data processing device 500 and located remotely. Alternatively, it can be integrated in data processing device 500. For example, data processing device 500 may include memory 501 as one or more hard disk drives acting as a storage database. Alternatively, where the storage database is external to data processing device 500, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 503 can be operatively coupled to the storage device (storage database) via a storage interface 507. Storage interface 507 is any component capable of providing processor 503 with access to the storage device. Storage interface 507 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 503 with access to the storage device.

Memory 501 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

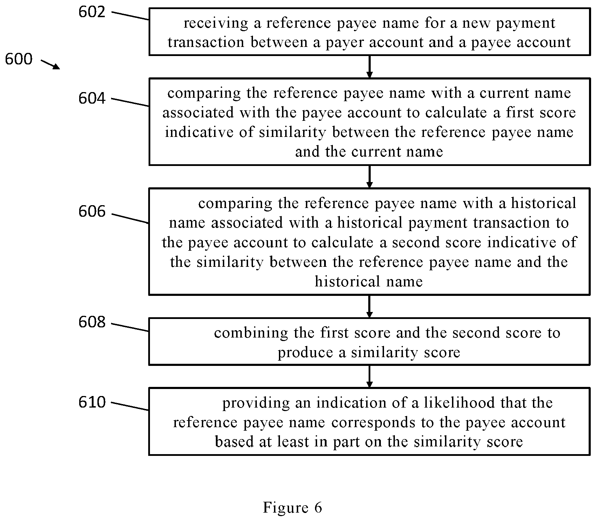

Referring to Figure 6, a flow diagram 600 of a computer implemented method for providing confirmation of a payee name is shown, as may be performed by any of systems 100, 200, 300 described above in relation to Figures 1 to 3.

At step 602, the method involves receiving a reference payee name for a new payment transaction between a payer account and a payee account.

At step 604, the method involves comparing the reference payee name with a current name associated with the payee account to calculate a first score indicative of similarity between the reference payee name and the current name.

At step 606, the method involves comparing the reference payee name with a historical name associated with a historical payment transaction to the payee account to calculate a second score indicative of the similarity between the reference payee name and the historical name.

At step 608, the method involves combining the first score and the second score to produce a similarity score.

At step 610, the method involves providing an indication of a likelihood that the reference payee name corresponds to the payee account based at least in part on the similarity score.

The systems shown in Figures 1 to 3 may further comprise a payment verification processor (not shown). The payment verification processor may be configured to, based on the indication of the likelihood that the reference payee name corresponds to the payee account, determine a continued process for the new payment transaction.

The continued process may result in the new payment transaction being completed or may result in the new payment transaction being terminated/suspended, based upon the indication. Thus, where the likelihood that the reference payee name corresponds to the payee account is low, incorrect or illegitimate transactions may be advantageously prevented.

The following examples show results obtained from preliminary testing of the methods described herein. Various different account types (architypes) have been tested in order to show that the payee name confirmation methods of the present invention - namely producing a similarity score by combining a first score (indicative of similarity between the reference payee name and the current name) and a second score (indicative of the similarity between the reference payee name and the historical name) - may beneficially assist in detecting and preventing incorrect or fraudulent transactions.

Details have been changed to avoid showing personal information. In addition to the reference payee names and current names that are shown, each payee account had historical transactions with suitable historical names. The VN values (first scores) and VNH values (second scores) are all within a range of 1 to 999, wherein 1 corresponds to an exact match and 999 corresponds to little/no similarity between the pair of names.

### Example 1 - Business Owner

In this example, the payee account corresponds to a business account; the current name is "Crosstown Bakehouse". Results are shown in Table 1 for a number of different reference payee names (indicated by ID numbers).

As shown in IDs 1, 5 and 7, when the reference payee name is the same as/similar to the current name, both the VN and the VNH scores are relatively low (so long as the current name and/or similar variations of it also appear in the historical names). Consequently, the VN - VNH score is weakly positive or negative. This may be taken as an indication that there is a high likelihood that the reference payee name corresponds to the payee account.

However, in IDs 2, 3 and 4, the reference payee name is not similar to the current name, thus the VN score in each case is relatively high. However, this reference payee name and/or similar variations of it do appear in the historical names - "Asim Shar" may be the owner of the business, and consequently third-parties have made transactions to/from this payee account using this name in the past. Therefore, the VNH scores for these reference payee names are relatively low. Consequently, the VN - VNH scores for IDs 2, 3 and 4 are strongly positive. Relying upon just the VN score would likely result in these transactions being rejected - there does not appear to be a match between the reference payee name and the current name. But the combined score indicates that the reference payee name does correspond to the payee account. This may be further enhanced by considering the account architype information. Knowing that this is a business account, the likelihood may be modified to indicate a match.

Finally, ID 6 uses a generic string of characters, resulting in high VN and VNH scores. The combined VN - VNH score is moderately low. But based upon both a high VN score and a moderate VNH score, this reference payee name may be determined to have a low likelihood of corresponding to the payee account. This may be further enhanced by considering a complexity or genericness metric. Knowing that the reference payee name is a generic string of characters, the likelihood may be modified to indicate that this is not a match.

**Table 1: Payee name confirmation results for a business account.**

| **ID** | **Reference payee name** | **Current name** | **VN** | **VNH** | **VN - VNH** |
|---|---|---|---|---|---|
| 1 | Crosstown bakehouse | Crosstown Bakehouse | 1 | 89 | -88 |
| 2 | asim shah | Crosstown Bakehouse | 622 | 1 | 621 |
| 3 | asim shah baker | Crosstown Bakehouse | 455 | 13 | 442 |
| 4 | shahs bakery | Crosstown Bakehouse | 400 | 13 | 387 |
| 5 | the Crosstown bake | Crosstown Bakehouse | 325 | 139 | 186 |
| 6 | oobo | Crosstown Bakehouse | 804 | 560 | 244 |
| 7 | the Crosstown bakeho | Crosstown Bakehouse | 250 | 148 | 102 |

### Example 2: Potential fraudulent account

In this example, the payee account corresponds to an account that may be regarded as potentially fraudulent; the current name is "Paul Johnson". Results are shown in Table 2 for a number of different reference payee names (indicated by ID numbers).

IDs 2 to 5 shows that when the reference payee name is "helen trump" or a similar variation, the VNH score is low. This indicates that historical transactions for this payee account have been from/to said Helen Trump. This is despite these reference payee names not matching the current name (as shown by the high VN score).

In ID 1, the reference payee name "paul Johnson" is an exact match to the current name (VN score = 1). However, the VNH score is high, indicating that this reference payee name does not appear in historical payment transactions. Consequently, the combined VN - VNH score is strongly negative. This may be taken as an indication that this payee account is being used for fraudulent or illegitimate purposes. It may be regarded as unusual for the current name not to appear in the historical names of the account (or only appear infrequently).

**Table 2: Payee name confirmation for a potential fraudulent account.**

| **ID** | **Reference payee name** | **Current name** | **VN** | **VNH** | **VN - VNH** |
|---|---|---|---|---|---|
| 1 | paul Johnson | Paul Johnson | 1 | 845 | -844 |
| 2 | helen trump | Paul Johnson | 721 | 36 | 685 |
| 3 | helen m trump | Paul Johnson | 754 | 1 | 753 |
| 4 | h m trump | Paul Johnson | 788 | 1 | 787 |
| 5 | trump | Paul Johnson | 811 | 79 | 732 |
| 6 | h trump | Paul Johnson | 788 | 20 | 768 |

Although specific examples have been described, the skilled person will appreciate that variations are possible, within the scope of the invention, which should be determined with reference to the accompanying claims.

## Claims

1. A computer implemented method for providing confirmation of a payee name, the method comprising:
receiving a reference payee name for a new payment transaction between a payer account and a payee account;
comparing the reference payee name with a current name associated with the payee account to calculate a first score indicative of similarity between the reference payee name and the current name;
comparing the reference payee name with a historical name associated with a historical payment transaction to the payee account to calculate a second score indicative of the similarity between the reference payee name and the historical name;
combining the first score and the second score to produce a similarity score; and
providing an indication of a likelihood that the reference payee name corresponds to the payee account based at least in part on the similarity score.

2. The computer implemented method of claim 1, further comprising:
based on the indication of the likelihood that the reference payee name corresponds to the payee account, determining a continued process for the new payment transaction.

3. The computer implemented method of claim 2, wherein, when the likelihood that the reference payee name corresponds to the payee account is below a predetermined threshold, the continued process for the new payment transaction comprises at least one of:
updating the reference payee name; and
cancelling the new payment transaction.

4. The computer implemented method of any preceding claim, wherein combining the first score and the second score comprises subtracting one of the first score and the second score from the other of the first score and the second score, so as to produce the similarity score.

5. The computer implemented method of any preceding claim, further comprising comparing the similarity score to a predetermined threshold, wherein the likelihood that the reference payee name corresponds to the payee account is based upon the comparison of the similarity score and the predetermined threshold.

6. The computer implemented method of any preceding claim, wherein:
comparing the reference payee name with the historical name comprises comparing the reference payee name with a plurality of historical names, each associated with one of a plurality of historical payment transactions to the payee account; and
calculating the second score comprises:
calculating a plurality of second scores, each being indicative of the similarity between the reference payee name and one of the historical names of the plurality of historical names; and
combining the plurality of second scores.

7. The computer implemented method of claim 6, wherein combining the plurality of second scores comprises weighting each of the plurality of second scores based upon a number of occurrences and/or a value of historical payment transactions associated with each of the plurality of historical names.

8. The computer implemented method of any preceding claim, wherein comparing the reference payee name with the current name and comparing the reference payee name with the historical name comprise calculating an edit distance between each pair of names, and wherein the first score and second score are based at least in part on the respective edit distance.

9. The computer implemented method of any preceding claim, further comprising:
determining that at least one of the reference payee name, current name and historical name comprise a plurality of names;
separating said plurality of names; and
comparing the relevant names and calculating the first and/or second score for each of the separated names.

10. The computer implemented method of any preceding claim, further comprising:
determining a linguistic characteristic of the at least one of the reference payee name, current name and historical name; and
modifying the likelihood that the reference payee name corresponds to the payee account based upon the determined linguistic characteristic.

11. The computer implemented method of claim 10, wherein the linguistic characteristic is indicative of at least one of:
(i) a complexity of the name;
(ii) the likelihood that the name is or comprises a generic sequence of characters; and
(iii) the likelihood that the name is or comprises a real name.

12. The computer implemented method of any preceding claim, further comprising:
determining an account archetype for the payee account based on historical names associated with historical payment transactions to the payee account; and
modifying the likelihood that the reference payee name corresponds to the payee account based upon the determined account archetype.

13. The computer implemented method of claim 12, wherein the account archetype is at least one of:
(i) a business account, wherein the historical names comprise a business name and an individual name;
(ii) a joint account, wherein the historical names comprise two different individual names and/or a joint name; and
(iii) a maiden name account, wherein the historical names comprise two different surnames with a common forename.

14. A system for providing confirmation of a payee name, wherein the system is configured to perform the method of any of claims 1 to 13.

15. A non-transitory computer-readable medium comprising instructions which, when executed by a computer, cause the computer to carry out the method of any claim 1 to 13.
